# EUROPÄISCHE PATENTSCHRIFT

(11) **EP 3 454 103 B1**
(45) Veröffentlichungstag und Bekanntmachung des Hinweises auf die Patenterteilung: **06.03.2024**
(21) Anmeldenummer: 18192160.2
(22) Anmeldetag: 03.09.2018
(51) Int. Cl.: G02B 27/09, H01S 3/23, G02B 7/182, G02B 21/00, G02B 17/00, G02B 27/00, H01S 3/00

(54) **OPTISCHE ANORDNUNG UND VERFAHREN ZUR BEEINFLUSSUNG EINER DISPERSION VON WELLENLÄNGEN MINDESTENS EINES LICHTPULSES ODER LICHTSTRAHLS**
OPTICAL ARRANGEMENT AND METHOD FOR INFLUENCING A DISPERSION OF WAVELENGTHS OF AT LEAST ONE LIGHT PULSE OR LIGHT BEAM
DISPOSITIF OPTIQUE ET PROCÉDÉ PERMETTANT D'AGIR SUR UNE DISPERSION DE LONGUEURS D'ONDES D'AU MOINS UNE IMPULSION LUMINEUSE OU UN FAISCEAU LUMINEUX

(30) Priorität: 04.09.2017 DE 102017120317
(43) Veröffentlichungstag der Anmeldung: 13.03.2019
(73) Patentinhaber: Leica Microsystems CMS GmbH, 35578 Wetzlar (DE)
(72) Erfinder: Leimbach, Volker, 68549 Ilvesheim (DE); Dr. Kremer, Manuel, 69181 Leimen (DE)
(74) Vertreter: Schaumburg und Partner Patentanwälte mbB

(56) Entgegenhaltungen:
- WO-A1-2006/079861
- WO-A1-2014/139582
- WO-A1-2016/155191
- US-A1- 2011 211 600
- HEPPNER J ET AL: "INTRACAVITY CHIRP COMPENSATION IN A COLLIDING PULSE MODE-LOCKED LASER USING THIN-FILM INTERFEROMETERS", APPLIED PHYSICS LETTERS, A I P PUBLISHING LLC, US, Bd. 47, Nr. 5, 1. September 1985 (1985-09-01), Seiten 453-455, XP000706646, ISSN: 0003-6951, DOI: 10.1063/1.96144

## Beschreibung

Die vorliegende Erfindung betrifft eine optische Anordnung, insbesondere Mikroskop, mit einer Lichtquelle zur Erzeugung eines mindestens einen Lichtpuls aufweisenden Lichtstrahls und mehreren in einem Strahlengang des Lichtstrahls angeordneten gechirpten Spiegeln zur Beeinflussung einer Dispersion von Wellenlängen des mindestens einen Lichtpulses oder des Lichtstrahls.

Des Weiteren betrifft die vorliegende Erfindung ein Verfahren zur Beeinflussung einer Dispersion von Wellenlängen mindestens eines Lichtpulses oder Lichtstrahls, insbesondere unter Verwendung einer wie oben beschriebenen optischen Anordnung, vorzugsweise eines Mikroskops, wobei ein mit einer Lichtquelle erzeugter und mindestens einen Lichtpuls aufweisender Lichtstrahl durch mehrere in einem Strahlengang des Lichtstrahls angeordnete gechirpte Spiegel bezüglich der Dispersion seiner Wellenlängen beeinflusst wird.

Kurze Lichtpulse werden bspw. durch sogenannte Kurzpulslaser erzeugt, die in zahlreichen Anwendungen eingesetzt werden, bspw. in spektroskopischen und materialverarbeitenden Verfahren. Angetrieben durch diese Verfahren werden in der Praxis Laser mit immer höherer Ausgangsleistung und kürzeren Pulsen benötigt.

Die spektrale Bandbreite eines Lichtpulses steht in Zusammenhang mit der Pulsdauer. Bspw. beträgt die Bandbreite (FWHM) eines Gauss-Pulses mit einer Pulsdauer von 100 fs bei 800 nm 11 nm. Bei kürzeren Pulsen wird das Wellenlängenspektrum merkbar breiter. Ein 10 fs-Puls weist eine Bandbreite von 107 nm auf.

Wenn solch ein breiter Puls durch ein optisches Medium hindurchtritt, schreiten die spektralen Komponenten dieses Pulses mit unterschiedlichen Geschwindigkeiten voran. Übliche dispersive Medien, bspw. Glas, üben einen sogenannten "positiven Chirp" auf den Puls aus, was bedeutet, dass die Komponenten mit kurzen Wellenlängen - blau - bezüglich der Komponenten mit langen Wellenlängen - rot - verzögert werden. Eine ähnliche Verbreiterung kann in vielen Fällen beobachtet werden, auch falls beispielsweise ein Puls durch einen dielektrischen Spiegel reflektiert wird. In dem Sub-100-fs-Bereich ist es wesentlich, die Phaseneigenschaften jeder optischen Komponente über die extrem weite Bandbreite des Femtosekundenlasers zu kontrollieren. Eine mathematische Analyse der Phasenverschiebung, die auf einen Puls ausgeübt wird, der durch ein Medium hindurchtritt oder durch einen Spiegel reflektiert wird, zeigt, dass die wesentlichen physikalischen Eigenschaften, die dieses Phänomen beschreiben, die Gruppenverzögerungsdispersion (GDD) und die Dispersion dritter Ordnung (TOD) sind.

Speziell gestaltete dielektrische oder "gechirpte" Spiegel bieten die Möglichkeit, einen "negativen Chirp" auf einen Puls auszuüben. Daher kann der positive Chirp kompensiert werden, der beispielsweise von Kristallen, Fenstern und der propagierten Luftstrecke usw. resultiert.

Das GDD-Spektrum eines dielektrischen Spiegels mit negativer Dispersion weist keine kontinuierliche flache Kurve auf. Sämtliche Typen von Spiegeln mit negativer Dispersion zeigen Oszillationen in dem GDD-Spektrum. Diese Oszillationen sind bei üblichen Bandbreiten gering. Jedoch zeigen Spiegel mit negativer Dispersion im Breitbandbereich starke GDD-Oszillationen. Ein beträchtliches Abflachen dieser Oszillationen kann durch Verwendung von Spiegelpaaren erreicht werden, die aus Spiegeln mit geringfügig verschobenen GDD-Oszillationen bestehen. Diese Spiegelpaare sind speziell für dieses Kompensationsverhalten konstruiert.

Bspw. benötigt ein Multiphoton-Mikroskop ultrakurze Laserpulse oder Lichtpulse in der Probe. Die im Laser erzeugten Lichtpulse werden aber durch die unterschiedlichen Gläser bspw. der Abbildungsoptiken und durch akustooptische Komponenten, bspw. AOM (akustooptischer Modulator) oder AOD (akustooptischer Deflektor) gechirpt, d.h. zeitlich in die Länge gezogen. Die Kompensation durch Prechirp-Einheiten, die bspw. in den Laser integriert sind, reichen üblicherweise nicht aus, um die Pulse in der Mikroskop-Probe wieder auf eine möglichst minimale Länge zu formen.

Bekannte flexible Prismen- und Gitterkompensatoren, wie sie bspw. in Prechirp-Lasern verbaut sein können, benötigen viel Platz und sind teuer, erreichen aber trotzdem keinen ausreichenden Prechirp. Des Weiteren sind bisherige gechirpte Spiegel unflexibel, wobei sie noch weniger Prechirp erreichen oder eine extrem hohe Anzahl an Reflexionen benötigen, um einen erforderlichen Prechirp zu erreichen. An dieser Stelle darf festgehalten werden, dass im Rahmen dieses Dokuments die Begriffe "dielektrischer Spiegel" und "gechirpter Spiegel" synonym verwendet werden.

Aus dem Dokument WO 2016/155191 A1 ist eine optische Anordnung mit einer Lichtquelle zur Erzeugung von gepulsten Lichtstrahlen sowie einer in einem Strahlengang des Lichtstrahls angeordneten gechirpten Kavität offenbart, die dazu dient, die Dispersion des Lichtstrahls zu beeinflussen. Die gechirpte Kavität ist aus einem Paar nicht-paralleler Spiegel gebildet. Um zu gewährleisten, dass der Lichtstrahl auf dem Weg, auf dem er in die Kavität eintritt, auch wieder zurückläuft, sind sowohl für den Einfallswinkel, unter dem der Lichtstrahl auf den Frontspiegel der Kavität trifft, als auch für den Winkel, den die beiden Spiegel zueinander aufweisen, nur diskrete Werte möglich.

Zum Stand der Technik wird zudem verwiesen auf die Dokumente US 2011/211600 A1, WO 2014/139582 A1, WO 2006/079861 A1 und Heppner et al: "Intracavity chirp compensation in a colliding pulse mode-locked laser using thin-film interferometers", APPLIED PHYSICS LETTERS, A I P PUBLISHING LLC, US, Bd. 47, Nr. 5, 1. September 1985 (1985-09-01), Seiten 453-455, XP000706646, ISSN: 0003-6951, DOI: 10.1063/1.96144. Aus diesen Dokumenten sind optische Anordnungen bekannt, die optische Elemente zur Beeinflussung von gepulstem Laserlicht aufweisen.

Der vorliegenden Erfindung liegt somit die Aufgabe zugrunde, eine optische Anordnung und ein Verfahren zur Beeinflussung einer Dispersion von Wellenlängen mindestens eines Lichtpulses oder Lichtstrahls derart auszugestalten und weiterzubilden, dass nach Durchlaufen der oder einer optischen Anordnung eine möglichst geringe Lichtpulsbreite auf flexible Weise und mit konstruktiv einfachen Mitteln erreichbar ist. Erfindungsgemäß wird die voranstehende Aufgabe durch eine optische Anordnung mit den Merkmalen des Anspruchs 1 sowie durch ein Verfahren mit den Merkmalen des Anspruchs 11 gelöst.

Danach ist gemäß Anspruch 1 eine optische Anordnung angegeben, wobei die mehreren gechirpten Spiegel derart relativ zueinander im Strahlengang des Lichtstrahls angeordnet sind und mindestens einer der gechirpten Spiegel derart relativ zu dem Lichtstrahl kontinuierlich bewegbar ist, dass durch ein Bewegen des mindestens einen gechirpten Spiegels der Einfallswinkel des Lichtstrahls auf den jeweiligen gechirpten Spiegel zur Veränderung der Dispersion einstellbar ist und dass eine Position und eine Strahlrichtung des Lichtstrahls - nach einem Durchlaufen der Anordnung der gechirpten Spiegel - durch ein Bewegen des mindestens einen gechirpten Spiegels nicht verändert wird.

Des Weiteren ist gemäß Anspruch 11 ein Verfahren angegeben, wobei die mehreren gechirpten Spiegel derart relativ zueinander im Strahlengang des Lichtstrahls angeordnet werden und mindestens einer der gechirpten Spiegel derart relativ zu dem Lichtstrahl kontinuierlich bewegt wird, dass durch ein Bewegen des mindestens einen gechirpten Spiegels der Einfallswinkel des Lichtstrahls auf den jeweiligen gechirpten Spiegel zur Veränderung der Dispersion eingestellt wird und dass eine Position und eine Strahlrichtung des Lichtstrahls - nach einem Durchlaufen der Anordnung der gechirpten Spiegel - durch ein Bewegen des mindestens einen gechirpten Spiegels nicht verändert wird.

In erfindungsgemäßer Weise ist erkannt worden, dass durch geschickte Anordnung der gechirpten Spiegel relativ zueinander im Strahlengang des Lichtstrahls und darüber hinaus eine kontinuierliche Bewegbarkeit mindestens eines der gechirpten Spiegel relativ zu dem Lichtstrahl die voranstehende Aufgabe auf überraschend einfache Weise gelöst wird. Dabei ist die Anordnung und Bewegbarkeit der Spiegel derart gewählt, dass durch ein Bewegen des mindestens einen gechirpten Spiegels der Einfallswinkel des Lichtstrahls auf den jeweiligen gechirpten Spiegel zur Veränderung der Dispersion einstellbar ist und darüber hinaus eine Position und eine Strahlrichtung des Lichtstrahls - nach einem Durchlaufen der Anordnung der gechirpten Spiegel - durch ein Bewegen des mindestens einen gechirpten Spiegels nicht verändert wird. Dabei ist wesentlich, dass durch die kontinuierliche Bewegbarkeit des mindestens einen Spiegels die Dispersion mindestens eines Lichtpulses einstellbar ist, dass jedoch die Position und Strahlrichtung des Lichtstrahls durch diese Einstellbewegung nicht verändert wird. Bei der erfindungsgemäßen optischen Anordnung wird somit lediglich die Dispersion durch kontinuierliches Bewegen des mindestens einen Spiegels eingestellt, ohne dass Position und Strahlrichtung des Lichtstrahls - nach dem Durchlaufen der Anordnung der gechirpten Spiegel - beeinflusst werden. Insoweit kann die Spiegelanordnung auf einfache Weise auch in bereits bestehende Anordnungen integriert werden, ohne dass weitergehende Repositionierungen des Lichtstrahls aufgrund des Integrierens der Spiegelanordnung erforderlich werden. Durch das kontinuierliche Bewegen des mindestens einen Spiegels kann ein zusätzlicher Chirp erzeugt werden, der einen bestehenden Chirp - je nach Erfordernis - vergrößern oder verkleinern kann. Dieser zusätzliche Chirp kann zusätzlich zu den bereits in Prechirp-Lasern bereitgestellten Maßnahmen hinzugefügt werden. Hierdurch kommt man dem Ziel eines möglichst gleichzeitigen Ankommens aller Wellenlängen nach einem Durchlaufen der Anordnung der gechirpten Spiegel sehr nahe.

Folglich sind mit der erfindungsgemäßen optischen Anordnung und dem erfindungsgemäßen Verfahren eine optische Anordnung und ein Verfahren angegeben, mit denen nach Durchlaufen der oder einer optischen Anordnung eine möglichst geringe Lichtpulsbreite auf flexible Weise und mit konstruktiv einfachen Mitteln erreichbar ist.

In konstruktiv besonders einfacher Weise können zwei Spiegel zur Bildung einer Baugruppe in einem vorgebbaren Winkel zueinander fest miteinander gekoppelt sein und können weiterhin zwei derartige Baugruppen jeweils um parallel zueinander angeordnete Drehachsen relativ zueinander drehbar sein, wobei die Baugruppen derart miteinander gekoppelt sein können, dass ein Drehen einer Baugruppe um deren Drehachse in einer Drehrichtung ein gegenläufiges Drehen der anderen Baugruppe um deren Drehachse in der entgegengesetzten Drehrichtung zur Folge hat. Diese vier Spiegel umfassende Anordnung ist nicht nur konstruktiv sehr einfach, sondern gewährleistet auch eine besonders sichere Einstellbarkeit des Einfallswinkels des Lichtstrahls auf den jeweiligen Spiegel zur Veränderung der Dispersion. Die Bewegung eines Spiegels hat dabei aufgrund der vorteilhaften Kopplung der Baugruppen und damit der Spiegel untereinander ein entsprechendes Bewegen der anderen Spiegel zur Folge. Hierdurch ist nicht nur die Dispersion auf einfache Weise veränderbar, sondern auch besonders sicher gewährleistet, dass eine Position und eine Strahlrichtung des Lichtstrahls - nach einem Durchlaufen der Anordnung der Spiegel - durch das Bewegen der Spiegel nicht verändert wird. Insoweit bietet sich eine derartige Anordnung auch für eine nachträgliche Integration in bestehende Anordnungen, bspw. Mikroskope, an, wobei ein Strahlengang in der bestehenden Anordnung durch Integration der optischen Anordnung und deren Verwendung nicht verändert wird.

Im Hinblick auf eine besonders sichere Kopplung der beiden Baugruppen können die Baugruppen jeweils ein Zahnrad aufweisen, das mit einem Zahnrad der jeweils anderen Baugruppe zur Kopplung der Baugruppen kämmt. Durch die Zahnradkopplung ist quasi eine einfache "Zwangskopplung" der beiden Baugruppen miteinander realisiert, wodurch mit Sicherheit gewährleistet ist, dass ein Bewegen eines Spiegels "automatisch" zur vorgegebenen und geeigneten Bewegung der anderen Spiegel führt. Ganz allgemein kann die eine Baugruppe ein erstes Kopplungselement aufweisen, das mit einem zweiten Kopplungselement der anderen Baugruppe zur Kopplung der Baugruppen in Eingriff steht. Bevorzugt werden solche Kopplungselemente bzw. Mittel zur Kopplung eingesetzt, die eine möglichst genaue und schlupffreie Kopplung der Bewegung der beiden Baugruppen gewährleistet.

Bei einem vorteilhaften Ausführungsbeispiel können die zwei Spiegel einer Baugruppe in einem Winkel von 90° zueinander angeordnet sein. Dies gewährleistet eine sichere Strahlführung durch die optische Anordnung und die beiden Baugruppen hindurch.

Im Hinblick auf eine besonders flexible und sichere Bewegung der Spiegel und damit Einstellbarkeit des Einfallswinkels des Lichtstrahls und damit weiter der Dispersion von Wellenlängen kann mindestens einer Baugruppe ein vorzugsweise elektrischer Antrieb zur Drehung der Baugruppe zugeordnet sein. Ein derartiger elektrischer Antrieb kann mit einer geeigneten elektronischen Steuerung, bspw. eine Recheneinheit, gekoppelt sein, um einen besonders sicheren Betrieb der optischen Anordnung zu gewährleisten.

Durch das Bewegen des mindestens eines gechirpten Spiegels kann eine Gruppenverzögerungsdispersion, GDD, je nach Erfordernis, einstellbar sein. Des Weiteren können Rippel eines GDD-Spektrums verschiebbar sein, um letztendlich eine möglichst schmale spektrale Bandbreite eines Lichtpulses im Lichtstrahl zu erreichen. Eine Veränderung der Position des Ausgangsstrahls oder des Winkels des Ausgangsstrahls tritt hierbei nicht auf.

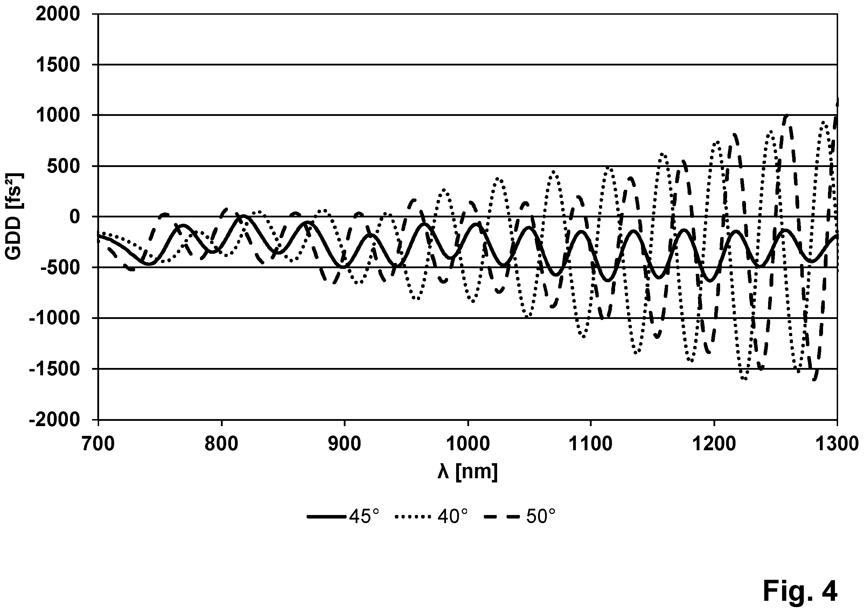

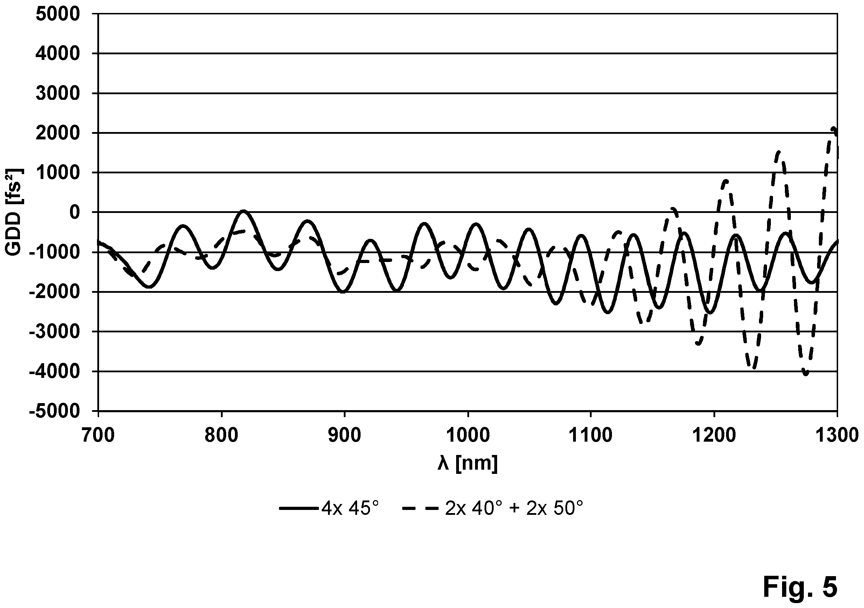

In weiter vorteilhafter Weise können durch Bewegen des mindestens einen gechirpten Spiegels Rippel der Wellenlängen des mindestens einen Lichtpulses oder des Lichtstrahls reduziert werden. Weiterhin kann durch das Bewegen des mindestens einen gechirpten Spiegels eine Anpassung der Rippel erfolgen, um bei der Wellenlänge oder den Wellenlängen des mindestens einen Lichtpulses oder des Lichtstrahls ein vorgebbares Maß an Prechirp oder Chirp zu erreichen. Hierdurch können einerseits kürzere Pulse in einer Probe und dadurch bspw. eine effektivere Mehrphotonenanregung und andererseits längere Pulse in einer Probe und damit eine bessere Selektivität beispielsweise bei CARS Coherent Anti-Stokes Raman Spectroscopy, Messungen erreicht werden. Unter Rippel ist insbesondere die Schwankung der Gruppenverzögerungsdispersion GDD in Abhängigkeit der Wellenlänge - also Schwankungen des GDD-Spektrums - zu verstehen, wie sie beispielsweise in den Fig. 4 oder 5 gezeigt sind.

Bei einem bevorzugten Ausführungsbeispiel der vorliegenden Erfindung können mehrere Spiegel als Prechirp-Spiegel die beiden Spiegel einer Umschalteinrichtung einer optischen Anordnung mit einem Volumengitter zur Beeinflussung der Strahlrichtung mindestens eines Lichtstrahls bilden. Bei einer derartigen optischen Anordnung ist in einem Strahlengang vor dem Volumengitter eine Umschalteinrichtung zum Umschalten der Strahlrichtung und/oder Strahllage mindestens eines Lichtstrahls von einer ersten Strahlrichtung und/oder Strahllage, in der der mindestens eine Lichtstrahl nicht unter einem Akzeptanzwinkel des Volumengitters auf das Volumengitter trifft, zu einer zweiten Strahlrichtung und/oder Strahllage, in der der mindestens eine Lichtstrahl unter dem Akzeptanzwinkel auf das Volumengitter trifft, und/oder umgekehrt angeordnet. Hierdurch kann ein zusätzlicher Chirp reduziert werden, den das Volumengitter insgesamt einbringt.

Dabei kann das Volumengitter ein akustooptischer Deflektor, AOD, akustooptischer Modulator, AOM, Acousto-Optical Tunable Filter, AOTF, oder ein nicht akustooptisches Element sein. In diesem Fall kann auch eine Kompensation nur des Chirps erfolgen, den die Akustooptik im AOD, AOM oder AOTF zusätzlich zur Materialdispersion einbringt.

Bspw. bei einer Anordnung mit vier gechirpten Spiegeln können durch Ändern des Eintrittswinkels des Lichtstrahls oder des Lichtpulses die Rippel des GDD-Spektrums verschoben werden, ohne die Position des Ausgangsstrahls zu ändern und ohne den Winkel des Ausgangsstrahls zu ändern. Eine Anwendung besteht hierbei in der Reduktion der Rippel für den jeweils verwendeten Wellenlängenbereich. Bei einer anderen Anwendung kann der Rippel angepasst werden, um adaptiv bei der jeweils verwendeten Wellenlänge ein jeweils benötigtes Maß an Prechirp - negative GDD - zu erreichen. Hieraus resultieren kürzere Pulse in einer Probe und dadurch eine effektivere Mehrphotonenanregung.

Bei einer weiteren Anwendung können die Rippel angepasst werden, um adaptiv bei der jeweils verwendeten Wellenlänge ein jeweils benötigtes Maß an Chirp - positive GDD - zu erreichen, wodurch sich längere Pulse in einer Probe und eine bessere Selektivität bei bspw. CARS ergeben.

Mit der erfindungsgemäßen optischen Anordnung ist letztlich eine Anordnung von dielektrischen Spiegeln zur besonders flexiblen Einstellung der Gruppenverzögerungsdispersion angegeben.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel einer Spiegelanordnung einer erfindungsgemäßen optischen Anordnung,
- Fig. 2: in einer schematischen Darstellung die Spiegelanordnung aus Fig. 1 in einem weiter gedrehten Zustand,
- Fig. 3: in einer schematischen Darstellung die in Fig. 1 und 2 gezeigten Zustände übereinander,
- Fig. 4: in einem Diagramm GDD-Spektren eines Spiegels für verschiedene Winkel,
- Fig. 5: in einem Diagramm kombinierte GDD-Spektren von vier Spiegeln mit verschiedenen Winkelkombinationen,
- Fig. 6: in einer schematischen Darstellung eine weitere optische Anordnung gemäß einem zweiten Ausführungsbeispiel der Erfindung und
- Fig. 7: in einer schematischen Darstellung die optische Anordnung aus Fig. 6, wobei ein Lichtstrahl in eine zweite Strahlrichtung umgeschaltet ist.

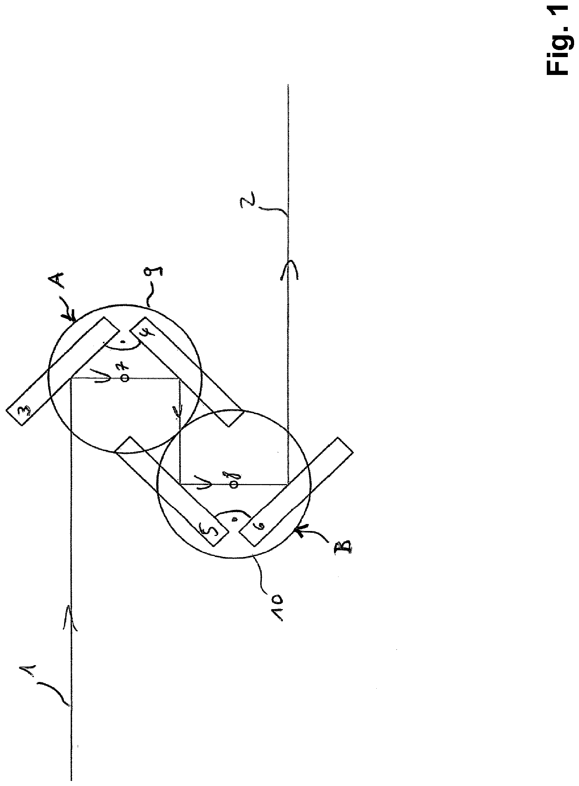

Fig. 1 zeigt in einer schematischen Darstellung eine Spiegelanordnung einer optischen Anordnung gemäß einem ersten Ausführungsbeispiel, wobei ein einfallender Laserstrahl oder Lichtstrahl 1 durch eine Baugruppe A und eine Baugruppe B geleitet wird und die Baugruppen A und B als austretender Laserstrahl oder Lichtstrahl 2 wieder verlässt.

Die Baugruppe A weist zwei Spiegel 3 und 4 und die Baugruppe B zwei Spiegel 5 und 6 auf. Die Baugruppe A ist um eine Drehachse 7 und die Baugruppe B um eine Drehachse 8 drehbar. Die Baugruppe A weist ein Zahnrad 9 und die Baugruppe Bein Zahnrad 10 auf, die zur Kopplung der Baugruppen A und B miteinander kämmen.

Die Spiegel 3 und 4 und die Spiegel 5 und 6 sind jeweils in einem Winkel von 90° zueinander angeordnet. Die Spiegel 3 bis 6 stehen vertikal auf den Zahnrädern 9 bzw. 10. Ein Drehen einer Baugruppe A oder B um deren Drehachse 7 oder 8 in einer Drehrichtung hat ein gegenläufiges Drehen der anderen Baugruppe B oder A um deren Drehachse 8 oder 7 in der entgegengesetzten Drehrichtung zur Folge.

Der einfallende Laserstrahl 1 erfährt in dem hier gezeigten Drehzustand nacheinander vier Reflexionen an jeweils den Spiegeln 3 bis 6 unter einem Eintrittswinkel von 45° zwischen dem Laserstrahl 1 und den jeweiligen Flächennormalen der Spiegel 3 bis 6. Dabei wird der Lichtstrahl 1 zweimal im Uhrzeigersinn um jeweils 90° und zweimal im entgegengesetzten Uhrzeigersinn um jeweils 90° umgelenkt. Die reflektierende Oberfläche des Spiegels 3 hat einen festen Winkel von 90° zur reflektierenden Oberfläche des Spiegels 4. Genauso hat die reflektierende Oberfläche des Spiegels 5 einen festen Winkel von 90° zur reflektierenden Oberfläche des Spiegels 6. Die Spiegel 4 und 5 sind in dem hier gezeigten Drehzustand parallel und die Spiegel 3 und 6 senkrecht zueinander angeordnet. Die Spiegel 3 und 4 sowie das Zahnrad 9 sind fest miteinander verbunden. Genauso sind die Spiegel 5 und 6 und das Zahnrad 10 fest miteinander verbunden.

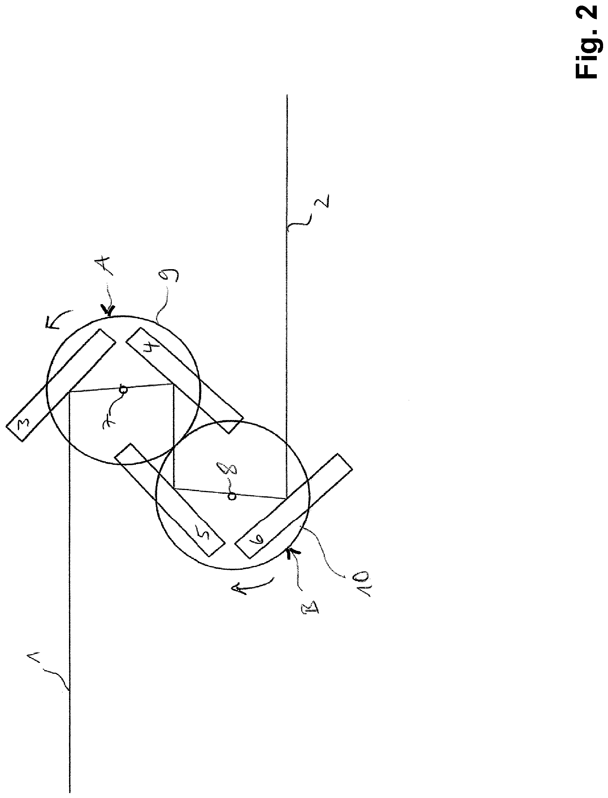

Fig. 2 zeigt die Spiegelanordnung aus Fig. 1 in einem geringfügig um die Drehachsen 7 und 8 gedrehten Zustand, wobei die Baugruppe A im entgegengesetzten Uhrzeigersinn und die Baugruppe B im Uhrzeigersinn aufgrund der Kopplung der Zahnräder 9 und 10 um den gleichen Winkelbetrag verdreht sind. In dieser in Fig. 2 gezeigten Situation trifft der einfallende Laserstrahl 1 unter einem Eintrittswinkel von 50° zwischen Laserstrahl und der Flächennormalen des Spiegels 3 auf den Spiegel 3.

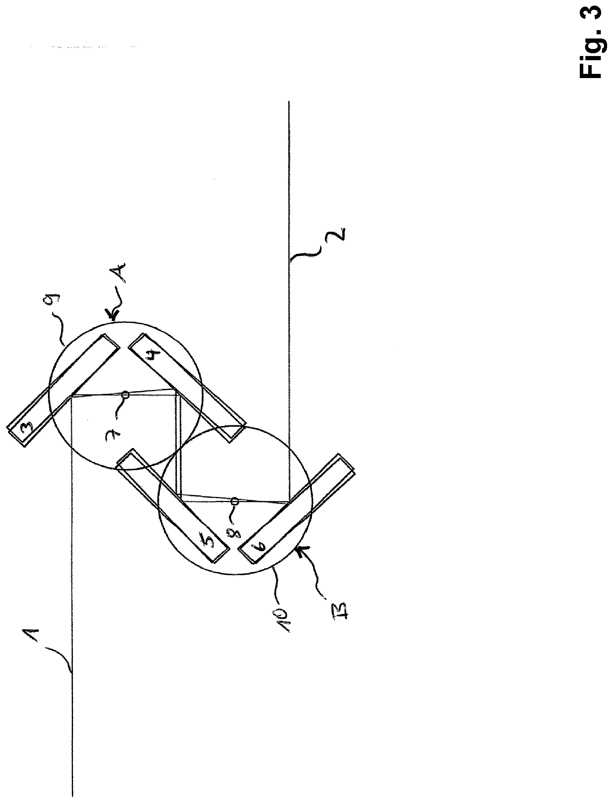

Fig. 3 zeigt in einer schematischen Darstellung die Drehzustände aus den Fig. 1 und 2 in einer übereinander gelegten Darstellung, so dass die Auswirkung des Drehens der Baugruppen A und B besser erkannt werden kann.

Bei dem hier gezeigten Ausführungsbeispiel ist besonders bedeutsam, dass durch das Verdrehen der Baugruppen A und B keine Veränderung der Position oder der Strahlrichtung des austretenden Lichtstrahls 2 bewirkt wird. Sowohl Position als auch Strahlrichtung des austretenden Lichtstrahls 2 bleiben unverändert. Lediglich der Einfallswinkel des Lichtstrahls 1 auf die jeweiligen gechirpten Spiegel 3 bis 6 wird zur Veränderung der Dispersion eingestellt. Die Drehbewegung der Baugruppen A und B um die Achsen 7 und 8 erfolgt kontinuierlich, wobei die Drehbewegungen der Baugruppen A und B über die Zahnräder 9 und 10 zwangsgekoppelt sind.

Durch das Bewegen der Spiegel 3 bis 6 kann eine GDD eingestellt oder können Rippel eines GDD-Spektrums verschoben werden. Ein Prechirp oder Chirp kann erzeugt werden.

Die Fig. 4 und 5 zeigen jeweils in einem Diagramm GDD-Spektren eines Spiegels für verschiedene Winkel - Fig. 4 - und kombinierte GDD-Spektren von vier Spiegeln mit verschiedenen Winkelkombinationen - Fig. 5. Dabei ist die Wellenlänge λ gegen die Gruppenverzögerungsdispersion GDD aufgetragen.

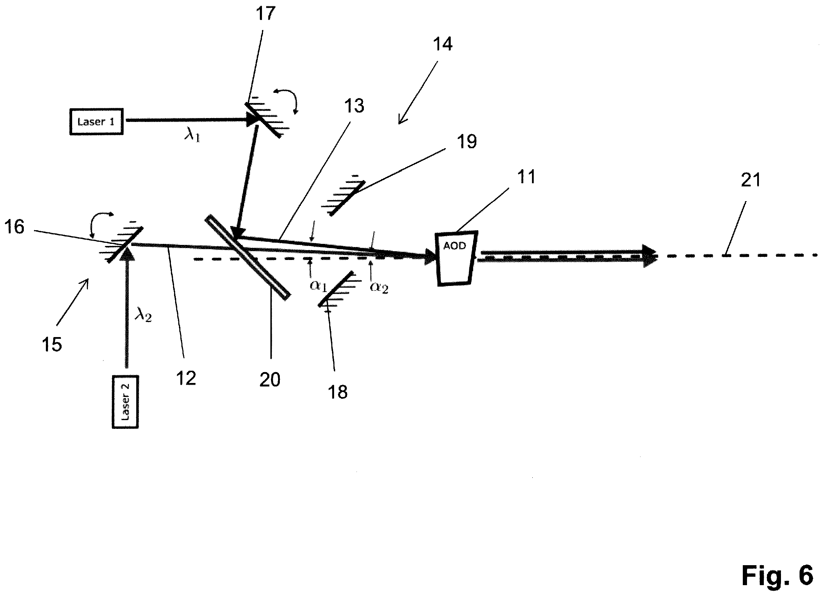

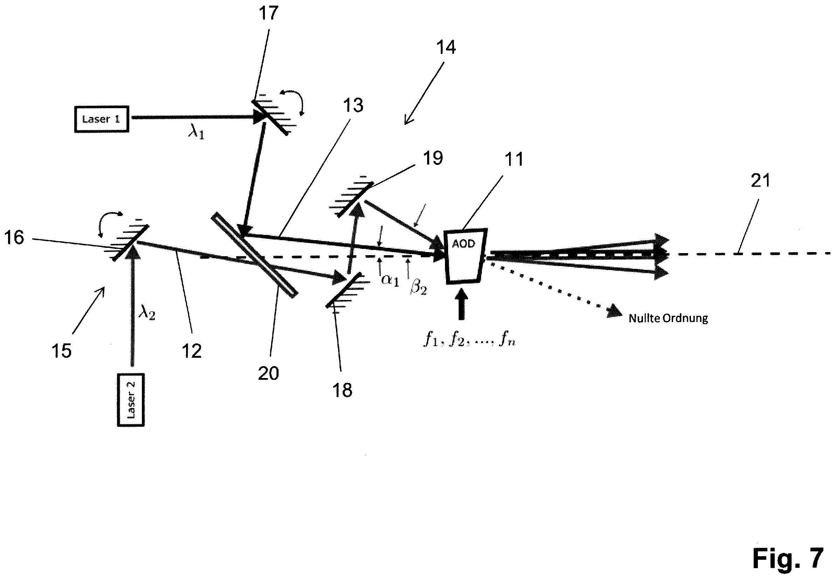

Die Fig. 6 und 7 zeigen in schematischen Darstellungen ein weiteres Ausführungsbeispiel einer erfindungsgemäßen optischen Anordnung im Rahmen eines speziellen beispielhaften Anwendungsfalls, wobei es sich hier um einen Einsatz der gechirpten Spiegel als Prechirp-Spiegel 18 und 19 im Rahmen einer Strahl-Umschalteinrichtung 14 handelt.

Die optische Anordnung weist ein als AOD ausgebildetes Volumengitter 11 zur Beeinflussung der Strahlrichtung von zwei Lichtstrahlen 12, 13 auf. Dabei sind die Lichtstrahlen 12 und 13 durch das Volumengitter 11 geführt. Im Hinblick auf ein flexibles Wechseln zwischen verschiedenen Beugungsordnungen eines durch das Volumengitter 11 geführten Lichtstrahls 12 ist in einem Strahlengang vor dem Volumengitter 11 eine Umschaltrichtung 14 zum Umschalten der Strahlrichtung des Lichtstrahls 12 von einer ersten Strahlrichtung, in der der Lichtstrahl 12 nicht unter einem Akzeptanzwinkel des Volumengitters 11 auf das Volumengitter 11 trifft, zu einer zweiten Strahlrichtung, in der der Lichtstrahl 12 unter dem Akzeptanzwinkel auf das Volumengitter 11 trifft, und umgekehrt angeordnet. Es kann also beliebig zwischen den beiden Strahlrichtungen hin- und hergeschaltet werden, um unterschiedlichen Anwendungsfällen gerecht zu werden.

Die Umschalteinrichtung 14 oder das Umschalten der Strahlrichtung des Lichtstrahls 12 ist durch eine Justiereinheit 15 aktivierbar, die zur Vorgabe und Einstellung der ersten Strahlrichtung des Lichtstrahls 12 vorgesehen ist. Die Justiereinheit 15 weist einen Spiegel 16 auf, mit dem die Strahlrichtung des Lichtstrahls 12 justiert werden kann. In entsprechender Weise ist ein Spiegel 17 zur Justierung der Strahlrichtung des Lichtstrahls 13 vorgesehen.

Die Umschalteinrichtung 14 weist die zwei gechirpten Spiegel 18, 19 auf, die den Lichtstrahl 12 nach einem Schwenken des Lichtstrahls 12 aus seiner ersten Strahlrichtung gemäß Fig. 6 mittels des Spiegels 16 auf den Spiegel 18 nach einer weiteren Reflexion am Spiegel 19 in seine zweite Strahlrichtung lenken, in der der Lichtstrahl 12 unter dem Akzeptanzwinkel auf das Volumengitter 11 trifft. Dieser zweite Betriebszustand ist in Fig. 7 gezeigt.

Während des Umschaltens verbleibt der Lichtstrahl 13 in seiner ursprünglichen Richtung, wobei der Lichtstrahl 13 von einem ersten Laser erzeugt wird und mittels des Spiegels 17 auf einen Strahlvereiniger 20 gelenkt und dann unter einem Winkel α₁ zu einer optischen Achse 21 auf das Volumengitter 11 trifft. Dieser Winkel α₁ bleibt während der Umschaltung mittels der Umschalteinrichtung 14 unverändert.

Der von einem zweiten Laser erzeugte Lichtstrahl 12 trifft im ersten Betriebszustand, in dem der Lichtstrahl 12 nicht unter dem Akzeptanzwinkel auf das Volumengitter 11 trifft, mit einem Winkel α₂ zur optischen Achse 21 auf das Volumengitter 11. Im in Fig. 7 dargestellten zweiten Betriebszustand trifft der Lichtstrahl 12 nach dem Umschaltvorgang unter einem Winkel β₂ zur optischen Achse 21 auf das Volumengitter 11. Dieser Winkel β₂ kann beispielsweise vier bis fünf Grad betragen.

Das als AOD ausgebildete Volumengitter 11 bewirkt gemäß Fig. 7 eine Beugung des Lichtstrahls 12 entsprechend der aufgeprägten Frequenzen f₁, f₂, ..., fₙ. Dabei zeigen eine gepunktete Pfeillinie die 0-te Beugungsordnung und die durchgezogenen Pfeillinien Beugungen erster Ordnung entsprechend den jeweils unterschiedlichen Frequenzen, mit denen das Volumengitter 11 beaufschlagt wird. Der ungebeugte Lichtstrahl 13 verläuft nach dem Durchgang durch das Volumengitter 11 parallel zur optischen Achse 21.

Zwischen dem Spiegel 19 und dem Volumengitter 11 könnte noch eine Einrichtung zur Veränderung der Polarisation eines Lichtstrahls, beispielsweise eine λ/2-Platte angeordnet sein, um die Polarisation des Lichtstrahls 12 vor seinem Eintritt in das Volumengitter 11 zu verändern.

Bei dem in den Fig. 6 und 7 gezeigten Ausführungsbeispiel der Erfindung werden mehrere Laserstrahlengänge durch einen Strahlvereiniger 20 zusammengeführt. Die Zusammenführung kann durch dichroitische oder polarisierende Strahlteiler erfolgen.

Bei dem in den Fig. 6 und 7 gezeigten Ausführungsbeispiel werden zwei Lichtstrahlen 12 und 13 mit Wellenlängen λ₁ und λ₂ durch einen als dichroitischen Strahlteiler ausgebildeten Strahlvereiniger 20 zusammengeführt.

Im gemeinsamen Strahlengang befindet sich ein als AOD ausgebildetes Volumengitter 11. Der AOD weist einen Akzeptanzwinkel auf, der möglicherweise wellenlängenabhängig ist. Wenn Licht im Akzeptanzwinkel auf den AOD trifft, beugt er das Licht in eine oder mehrere erste Beugungsordnungen, entsprechend der aufgeprägten akustischen Frequenzen f₁, f₂, ..., fₙ.

Ein grundsätzliches Ziel der optischen Anordnung besteht darin, dass der gemeinsame Strahlengang nach dem AOD entlang der optischen Achse 21 verläuft. Dazu werden Justiereinheiten 15 benutzt, die in den getrennten Strahlengängen stehen. Diese Justierung wird zunächst so vorgenommen, dass die Strahlenbündel nicht im Akzeptanzwinkel auf den AOD treffen und diesen ungebeugt passieren.

In Fig. 6 werden die Spiegel 16 und 17 so justiert, dass die Lichtstrahlen 12 und 13 die Winkel α₁ und α₂ zur optischen Achse 21 aufweisen, wenn sie den AOD treffen, so dass die transmittierten Lichtstrahlen 12 und 13 den AOD parallel auf der optischen Achse 21 verlassen. Die Justiereinheiten können auch bewegliche Linsen, bewegliche Faserausgänge oder ähnliches sein.

Soll nun der AOD benutzt werden, um den Winkel eines der Lichtstrahlen 12, 13 zu beeinflussen, so muss dieser Lichtstrahl 12, 13 oder dieses Strahlenbündel des Lichtstrahls 12, 13 den AOD unter dem Akzeptanzwinkel, d.h. üblicherweise in einem Akzeptanzwinkelbereich, treffen. Dazu wird eine der genannten Justiereinheiten 15 benutzt, und zwar diejenige, die sich in dem Strahlengang des gewünschten Lichtstrahls 12, 13 befindet.

Gemäß Fig. 7 wird der Spiegel 16 so justiert, dass das zugehörige Strahlenbündel oder der zugehörige Lichtstrahl 12 den AOD unter dem Akzeptanzwinkel trifft. Dabei weist der Lichtstrahl 12 den Winkel β₂ zur optischen Achse 21 auf. Jetzt kann das Strahlenbündel durch den AOD gebeugt werden, wenn diesem eine oder mehrere Frequenzen f₁, f₂, ..., fₙ aufgeprägt werden. Der andere Lichtstrahl 13 wird von dem AOD weiterhin nicht gebeugt, da er nicht unter dem Akzeptanzwinkel auf den AOD trifft.

Zwischen dem Akzeptanzwinkel und dem Winkel, unter dem man den AOD treffen muss, damit das ungebeugte Licht entlang der optischen Achse 21 austritt, liegt eine vorgegebene Winkeldifferenz. Diese Winkeldifferenz führt beim Umschalten zu einem Strahlversatz im Strahlengang des jeweiligen Lasers, der umgeschaltet wird. Je nach Größe der Winkeldifferenz und den geometrischen Abständen kann dieser Strahlversatz so groß werden, dass der Strahlvereiniger 20 oder andere Elemente in den Strahlgängen mit sehr großen Durchmessern ausgelegt werden müssen. Dies kann erfindungsgemäß dadurch umgangen werden, dass im gemeinsamen Strahlengang eine Anordnung von Spiegeln 18 und 19 vorgesehen wird, die den Effekt der Verstellung durch die Justiereinheit 15 verstärken oder überlagern.

Gemäß Fig. 7 sind die beiden Spiegel 18 und 19 für diesen Zweck vorgesehen. Wird der Spiegel 16 so bewegt, dass das Licht vom zweiten Laser den Spiegel 18 trifft, nimmt das Licht einen anderen Weg als in Fig. 6 und trifft der Lichtstrahl 12 den AOD unter dem Akzeptanzwinkel.

Auf diese Weise kann jeder Strahlengang individuell umgeschaltet werden, ohne dass die Strahlengänge jeweils einen besonders großen Strahlversatz aufnehmen müssen. Außerdem muss zur Umschaltung nur ein Bauteil pro Strahlengang, hier der Spiegel 16, bewegt werden. Die optische Anordnung lässt sich bei geeigneter Ausbildung auch für mehr als zwei Laser oder Lichtquellen verwenden.

Mit den gechirpten Spiegeln 18 und 19 können die Rippel der GDD-Spektren der beiden Spiegel 18 und 19 gegeneinander verschoben werden. Mit einer Anwendung der Spiegel 18 und 19 kann der zusätzliche Chirp reduziert werden, den das Volumengitter 11 in Form des AOD insgesamt einbringt. Alternativ hierzu kann nur der Chirp kompensiert werden, den die Akustooptik im Volumengitter 11 in Form des AOD zusätzlich zur Materialdispersion einbringt. Im Ergebnis können dabei kürzere Pulse in einer Probe und dadurch eine effektivere Mehrphotonenanregung erreicht werden. Hinsichtlich weiterer vorteilhafter Ausgestaltungen der erfindungsgemäßen optischen Anordnung und des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

## Patentansprüche

1. Optische Anordnung mit einer Lichtquelle zur Erzeugung eines mindestens einen Lichtpuls aufweisenden Lichtstrahls (1, 12) und mehreren in einem Strahlengang des Lichtstrahls angeordneten gechirpten Spiegeln (3-6, 18, 19) zur Beeinflussung einer Dispersion von Wellenlängen des mindestens einen Lichtpulses oder des Lichtstrahls (1, 12),
**dadurch gekennzeichnet, dass** die mehreren gechirpten Spiegel (3-6, 18, 19) derart relativ zueinander im Strahlengang des Lichtstrahls (1, 12) angeordnet sind und mindestens einer der gechirpten Spiegel (3-6, 18, 19) derart relativ zu dem Lichtstrahl (1, 12) kontinuierlich bewegbar ist, dass durch ein Bewegen des mindestens einen gechirpten Spiegels (3-6, 18, 19) der Einfallswinkel des einfallenden Lichtstrahls (1, 12) auf den jeweiligen gechirpten Spiegel (3-6, 18, 19) zur Veränderung der Dispersion einstellbar ist und dass eine Position und eine Strahlrichtung des austretenden Lichtstrahls (1, 12) - nach einem Durchlaufen der Anordnung der gechirpten Spiegel (3-6, 18, 19) - durch ein Bewegen des mindestens einen gechirpten Spiegels (3-6, 18, 19) nicht verändert wird.

2. Optische Anordnung nach Anspruch 1, **dadurch gekennzeichnet, dass** zwei Spiegel (3-6) zur Bildung einer Baugruppe (A, B) in einem vorgebbaren Winkel zueinander fest miteinander gekoppelt sind und dass zwei derartige Baugruppen (A, B) jeweils um parallel zueinander angeordnete Drehachsen (7, 8) relativ zueinander drehbar sind, wobei die Baugruppen (A, B) derart miteinander gekoppelt sind, dass ein Drehen einer Baugruppe (A, B) um deren Drehachse (7, 8) in einer Drehrichtung ein gegenläufiges Drehen der anderen Baugruppe (B, A) um deren Drehachse (8, 7) in der entgegengesetzten Drehrichtung zur Folge hat.

3. Optische Anordnung nach Anspruch 2, **dadurch gekennzeichnet, dass** die Baugruppen (A, B) jeweils ein Zahnrad (9, 10) aufweisen, das mit einem Zahnrad (10, 9) der jeweils anderen Baugruppe (B, A) zur Kopplung der Baugruppen (A, B) kämmt, oder dass zur Kopplung der beiden Baugruppen (A, B) die eine Baugruppe (A) ein erstes Kopplungselement aufweist, welches mit einem zweiten Kopplungselement der anderen Baugruppe (B) in Eingriff steht.

4. Optische Anordnung nach Anspruch 2 oder 3, **dadurch gekennzeichnet, dass** die zwei Spiegel (3-6) einer Baugruppe in einem Winkel von 90 Grad zueinander angeordnet sind.

5. Optische Anordnung nach einem der Ansprüche 2 bis 4, **dadurch gekennzeichnet, dass** mindestens einer Baugruppe (A, B) ein Antrieb zur Drehung der Baugruppe (A, B) zugeordnet ist.

6. Optische Anordnung nach Anspruch 5, **dadurch gekennzeichnet, dass** der Antrieb ein elektrischer Antrieb ist.

7. Optische Anordnung nach einem der Ansprüche 1 bis 6, **dadurch gekennzeichnet, dass** durch das Bewegen des mindestens einen gechirpten Spiegels (3-6, 18, 19) eine Gruppenverzögerungsdispersion, GDD, einstellbar ist oder Rippel eines GDD-Spektrums verschiebbar sind.

8. Optische Anordnung nach einem der Ansprüche 1 bis 7, **dadurch gekennzeichnet, dass** die mehreren Spiegel (18, 19) als Prechirp-Spiegel die beiden Spiegel (18, 19) einer Umschalteinrichtung (14) der optischen Anordnung bilden, wobei die optische Anordnung ein Volumengitter (11) zur Beeinflussung der Strahlrichtung mindestens eines Lichtstrahls (12) aufweist und wobei in einem Strahlengang vor dem Volumengitter (11) die Umschalteinrichtung (14) zum Umschalten der Strahlrichtung und/oder Strahllage mindestens eines Lichtstrahls (12) von einer ersten Strahlrichtung und/oder Strahllage, in der der mindestens eine Lichtstrahl (12) nicht unter einem Akzeptanzwinkel des Volumengitters (11) auf das Volumengitter (11) trifft, zu einer zweiten Strahlrichtung und/oder Strahllage, in der der mindestens eine Lichtstrahl (12) unter dem Akzeptanzwinkel auf das Volumengitter (11) trifft, und/oder umgekehrt angeordnet ist.

9. Optische Anordnung nach Anspruch 8, **dadurch gekennzeichnet, dass** das Volumengitter (11) ein akustooptischer Deflektor, AOD, akustooptischer Modulator, AOM, Acousto-Optical Tunable Filter, AOTF, oder ein nicht akustooptisches Element ist.

10. Optische Anordnung nach einem der Ansprüche 1 bis 9, **dadurch gekennzeichnet, dass** die optische Anordnung ein Mikroskop ist.

11. Verfahren zur Beeinflussung einer Dispersion von Wellenlängen mindestens eines Lichtpulses oder Lichtstrahls (1, 12) unter Verwendung einer optischen Anordnung nach einem der Ansprüche 1 bis 10, wobei ein mit einer Lichtquelle erzeugter und mindestens einen Lichtpuls aufweisender Lichtstrahl (1, 12) durch mehrere in einem Strahlengang des Lichtstrahls (1, 12) angeordnete gechirpte Spiegel (3-6, 18, 19) bezüglich der Dispersion seiner Wellenlängen beeinflusst wird, und
wobei die mehreren gechirpten Spiegel (3-6, 18, 19) derart relativ zueinander im Strahlengang des Lichtstrahls (1, 12) angeordnet werden und mindestens einer der gechirpten Spiegel (3-6, 18, 19) derart relativ zu dem Lichtstrahl (1, 12) kontinuierlich bewegbar ist, dass durch ein Bewegen des mindestens einen gechirpten Spiegels (3-6, 18, 19) der Einfallswinkel des einfallenden Lichtstrahls (1, 12) auf den jeweiligen gechirpten Spiegel (3-6, 18, 19) zur Veränderung der Dispersion eingestellt wird und dass eine Position und eine Strahlrichtung des austretenden Lichtstrahls (1, 12) - nach einem Durchlaufen der Anordnung der gechirpten Spiegel (3-6, 18, 19) - durch ein Bewegen des mindestens einen gechirpten Spiegels nicht verändert wird.

## Claims

1. An optical arrangement having a light source for generating a light beam (1, 12) having at least one light pulse and a plurality of chirped mirrors (3-6, 18, 19) arranged in a beam path of the light beam for influencing a dispersion of wavelengths of the at least one light pulse or of the light beam (1, 12),
**characterized in that** the plurality of chirped mirrors (3-6, 18, 19) are arranged relative to one another in the beam path of the light beam (1, 12) and at least one of the chirped mirrors (3-6, 18, 19) is continuously movable relative to the light beam (1, 12) in such a way that, by moving the at least one chirped mirror (3-6, 18, 19), the angle of incidence of the incident light beam (1, 12) onto the respective chirped mirror (3-6, 18, 19) can be adjusted to change the dispersion and that a position and a beam direction of the emerging light beam (1, 12) - after passing through the arrangement of the chirped mirrors (3-6, 18, 19) - is not changed by moving the at least one chirped mirror (3-6, 18, 19).

2. The optical arrangement according to claim 1, **characterized in that** two mirrors (3-6) are fixedly coupled to one another at a predeterminable angle to form an assembly (A, B), and **in that** two such assemblies (A, B) are each rotatable relative to one another about axes of rotation (7, 8) arranged parallel to one another, wherein the assemblies (A, B) are coupled to one another in such a way that a rotation of one assembly (A, B) about its axis of rotation (7, 8) in one direction of rotation results in counter-rotation of the other assembly (B, A) about its axis of rotation (8, 7) in the opposite direction of rotation.

3. The optical arrangement according to claim 2, **characterized in that** the assemblies (A, B) each have a gear wheel (9, 10) which meshes with a gear wheel (10, 9) of the respective other assembly (B, A) for coupling the assemblies (A, B), or **in that**, for coupling the two assemblies (A, B), one assembly (A) has a first coupling element which engages with a second coupling element of the other assembly (B).

4. The optical arrangement according to claim 2 or 3, **characterized in that** the two mirrors (3-6) of one assembly are arranged at an angle of 90 degrees to each other.

5. The optical arrangement according to one of claims 2 to 4, **characterized in that** a drive for rotating the assembly (A, B) is assigned to at least one assembly (A, B) .

6. The optical arrangement according to claim 5, **characterized in that** the drive is an electric drive.

7. The optical arrangement according to one of claims 1 to 6, **characterized in that** a group delay dispersion, GDD, can be adjusted or ripples of a GDD spectrum can be displaced by moving the at least one chirped mirror (3-6, 18, 19).

8. The optical arrangement according to one of claims 1 to 7, **characterized in that** the plurality of mirrors (18, 19) as prechirp mirrors form the two mirrors (18, 19) of a switching device (14) of the optical arrangement, wherein the optical arrangement has a volume grating (11) for influencing the beam direction of at least one light beam (12) and wherein, in a beam path in front of the volume grating (11), the switching device (14) for switching the beam direction and/or beam position of at least one light beam (12) from a first beam direction and/or beam position, in which the at least one light beam (12) does not strike the volume grating (11) at an acceptance angle of the volume grating (11), to a second beam direction and/or beam position in which the at least one light beam (12) strikes the volume grating (11) at the acceptance angle, and/or vice versa, is arranged.

9. The optical arrangement according to claim 8, **characterized in that** the volume grating (11) is an acousto-optical deflector, AOD, acousto-optical modulator, AOM, Acousto-Optical Tunable Filter, AOTF, or a non-acousto-optical element.

10. The optical arrangement according to any one of claims 1 to 9, **characterized in that** the optical arrangement is a microscope.

11. A method for influencing a dispersion of wavelengths of at least one light pulse or light beam (1, 12) using an optical arrangement according to one of claims 1 to 10, wherein a light beam (1, 12) generated by a light source and having at least one light pulse is influenced with respect to the dispersion of its wavelengths by a plurality of chirped mirrors (3-6, 18, 19) arranged in a beam path of the light beam (1, 12), and
wherein the plurality of chirped mirrors (3-6, 18, 19) are arranged relative to one another in the beam path of the light beam (1, 12) and at least one of the chirped mirrors (3-6, 18, 19) is continuously movable relative to the light beam (1, 12) in such a way that by moving the at least one chirped mirror (3-6, 18, 19) the angle of incidence of the incident light beam (1, 12) onto the respective chirped mirror (3-6, 18, 19) is adjusted to change the dispersion and that a position and a beam direction of the emerging light beam (1, 12) - after passing through the arrangement of the chirped mirrors (3-6, 18, 19) - is not changed by moving the at least one chirped mirror.

## Revendications

1. Ensemble optique comprenant une source de lumière destinée à générer un faisceau de lumière (1, 12) comportant au moins une impulsion de lumière et une pluralité de miroirs chirpés (3-6, 18, 19) disposés dans un trajet du faisceau de lumière afin d'influer sur une dispersion de longueurs d'onde de l'au moins une impulsion de lumière ou du faisceau de lumière (1, 12),
**caractérisé en ce que** la pluralité de miroirs chirpés (3-6, 18, 19) sont disposés les uns par rapport aux autres dans le trajet du faisceau de lumière (1, 12) et au moins un des miroirs chirpés (3-6, 18, 19) est mobile en continu par rapport au faisceau de lumière (1, 12) de manière à ce qu'un déplacement de l'au moins un miroir chirpé (3-6, 18, 19) permette de régler l'angle d'incidence du faisceau de lumière (1, 12) incident au miroir chirpé respectif (3-6, 18, 19) afin de modifier la dispersion et à ce que, après la traversée de l'ensemble des miroirs chirpés (3-6, 18, 19), une position et une direction du faisceau de lumière sortant (1, 12) ne soient pas modifiées par un déplacement de l'au moins un miroir chirpé (3-6, 18, 19) .

2. Ensemble optique selon la revendication 1, **caractérisé en ce que** deux miroirs (3-6) sont solidairement accouplés l'un à l'autre suivant un angle spécifiable l'un par rapport à l'autre afin de former un module (A, B) et **en ce que** deux tels modules (A, B) peuvent tourner l'un par rapport à l'autre respectivement sur des axes de rotation (7, 8) disposés parallèlement l'un à l'autre, les modules (A, B) étant accouplés l'un à l'autre de manière à ce que la rotation d'un module (A, B) sur son axe de rotation (7, 8) dans un sens de rotation entraîne une rotation inverse de l'autre module (B, A) sur son axe de rotation (8, 7) dans le sens de rotation opposé.

3. Ensemble optique selon la revendication 2, **caractérisé en ce que** les modules (A, B) comportent chacun une roue dentée (9, 10) qui s'engrène avec une roue dentée (10, 9) de l'autre module (B, A) afin d'accoupler les modules (A, B), ou **en ce que**, pour accoupler les deux modules (A, B), un module (A) comporte un premier élément d'accouplement qui s'engage avec un deuxième élément d'accouplement de l'autre module (B).

4. Ensemble optique selon la revendication 2 ou 3, **caractérisé en ce que** les deux miroirs (3-6) d'un module sont disposés suivant un angle de 90 degrés l'un par rapport à l'autre.

5. Ensemble optique selon l'une des revendications 2 à 4, **caractérisé en ce qu'**au moins un module (A, B) est associé à un entraînement destiné à faire tourner le module (A, B).

6. Ensemble optique selon la revendication 5, **caractérisé en ce que** l'entraînement est un entraînement électrique.

7. Ensemble optique selon l'une des revendications 1 à 6, **caractérisé en ce que** le déplacement de l'au moins un miroir chirpé (3-6, 18, 19) permet de régler une dispersion de retard de groupe, GDD, ou de déplacer des ondulations d'un spectre GDD.

8. Ensemble optique selon l'une des revendications 1 à 7, **caractérisé en ce que** la pluralité de miroirs (18, 19) conçus comme des miroirs pré-chirpés forment les deux miroirs (18, 19) d'un dispositif de commutation (14) de l'ensemble optique, l'ensemble optique comportant un réseau volumique (11) destiné à influer sur la direction d'au moins un faisceau de lumière (12) et le dispositif de commutation (14) est disposé dans un trajet de faisceau devant le réseau volumique (11) afin de commuter la direction et/ou la position d'au moins un faisceau de lumière (12) depuis une première direction de faisceau et/ou position de faisceau, dans lesquelles l'au moins un faisceau de lumière (12) n'est pas incident au réseau volumique (11) au-dessous d'un angle d'acceptation du réseau volumique (11), jusqu'à une deuxième direction de faisceau et/ou position de faisceau dans lesquelles l'au moins un faisceau de lumière (12) est incident au réseau volumique (11) au-dessous de l'angle d'acceptation, et/ou inversement.

9. Ensemble optique selon la revendication 8, **caractérisé en ce que** le réseau volumique (11) est un déflecteur acousto-optique AOD, un modulateur acousto-optique AOM, un filtre accordable de manière acousto-optique AOTF, ou un élément non acousto-optique.

10. Ensemble optique selon l'une des revendications 1 à 9, **caractérisé en ce que** l'ensemble optique est un microscope.

11. Procédé destiné à influer sur une dispersion de longueurs d'onde d'au moins une impulsion de lumière ou d'un faisceau de lumière (1, 12) à l'aide d'un ensemble optique selon l'une des revendications 1 à 10, une pluralité de miroirs chirpés (3-6, 18, 19) disposés dans un trajet de faisceau du faisceau de lumière (1, 12) influant sur un faisceau de lumière (1, 12), généré avec une source de lumière et comportant au moins une impulsion de lumière, en termes de dispersion de ses longueurs d'onde, et la pluralité de miroirs chirpés (3-6, 18, 19) étant disposés les uns par rapport aux autres dans le trajet du faisceau de lumière (1, 12) et au moins un des miroirs chirpés (3-6, 18, 19) étant mobile en continu par rapport au faisceau de lumière (1, 12) de manière à ce qu'un déplacement de l'au moins un miroir chirpé (3-6, 18, 19) permette de régler l'angle d'incidence du faisceau de lumière (1, 12) incident au miroir chirpé respectif (3-6, 18, 19) afin de modifier la dispersion et à ce que, après la traversée de l'ensemble des miroirs chirpés (3-6, 18, 19), une position et une direction du faisceau de lumière sortant (1, 12) ne soient pas modifiées par un déplacement de l'au moins un miroir chirpé (3-6, 18, 19) .
